# EUROPEAN PATENT APPLICATION

(11) **EP 1 099 594 A2**
(43) Date of publication of application: **16.05.2001**
(21) Application number: 00124449.0
(22) Date of filing: 08.11.2000
(51) Int. Cl.: B60N 2/22, B60N 2/42

(54) **Vehicular seat**

(30) Priority: 09.11.1999 JP 31766699
(71) Applicant: FUJI KIKO Co., Ltd., Kosai-shi, Shizuoka 431-0431 (JP)
(72) Inventor: Ikegaya, Isao, Washizu Plant of Fuji Kiko Co., Ltd, Shizuoka 431-0431 (JP)
(74) Representative: Grünecker, Kinkeldey, Stockmair & Schwanhäusser Anwaltssozietät

(57) **Abstract**

A seat having a seat back and a seat cushion has: a pair of first and second seat slide devices; a pair of first and second base plates; a pair of first and second arm plates adapted to be secured to the seat back of the seat; a pair of first and second lock devices for reclining the seat back of the seat; a drive device secured to one of the base plates, and having a drive gear; and an interlock rod having a first end portion and a second end portion. The interlock rod has: a pair of first and second stoppers fixedly disposed, respectively, in the vicinity of the first and second end portions of the interlock rod; a link lever for supporting a back portion of the seat cushion of the seat; and a sector gear fixedly disposed at one of the first and second end portions of the interlock rod.

## Description

### BACKGROUND OF THE INVENTION

The present invention relates in general to a vehicular seat. More specifically, the present invention relates to the vehicular seat with its drive device and seat lifter simplified, and the vehicular seat designed for protecting a seat occupant in a side vehicular collision.

### DESCRIPTION OF THE RELATED ART

The seat lifter of the vehicular seat is designed to support and elevate (raising and lowering) a seat cushion of the vehicular seat relative to a floor of the vehicle. It is in its entirety, or one of in its front portion and back portion that the seat cushion is thus elevated. The seat lifter is basically installed on a driver's seat of the vehicle. With the seat cushion thus elevated, a driver can individually set up his or her own vertical eye point, and is assured of a comfortable and safe drive.

Some conventional seat lifts elevate an entire area of the seat cushion of the vehicular seat. The vehicular seat has lower rails fixed to a vehicular body (floor) via legs disposed at both front and back ends of the seat cushion. Moreover, the vehicular seat has upper rails slidably engaging with the lower rails. A seat reclining device is fixed to the upper rails. Base plates of the seat reclining device, and the upper rails become large in size. Otherwise, the seat reclining device has a special support bracket for mounting the seat lifter.

A seat back receives the seat occupant's back, and generally the seat reclining device allows the seat back to move forward and backward so as to secure the best seat reclining condition for the seat occupant. More specifically, the seat reclining device has the base plates fixed to upper rails of the seat, and each of the base plates rotatably supports one of the arm plates that are hinged with the base plate via a lock device. Thereby, the seat back is mounted on the arm plates.

The seat lifter has an interlock rod between a pair of right and left base plates. The interlock rod is formed into a hollow pipe, and is rotatably supported. The interlock rod has a pair of link levers and a pair of link arms on right and left sides of the interlock rod. A metal fitting for fixing the seat cushion is pivotally mounted on the link arm. The metal fitting connects with a seat cushion case or with a seat pan for securing the seat cushion. A sector gear is pivotally supported at a first end of the interlock rod in the vicinity of the base plate. The sector gear engages with a drive gear mounted in a spring brake device. The spring brake device is fixed to the base plate. Therefore, two interlock rods are provided; one is a front interlock rod for elevating a front portion of the seat pan, the other is a back interlock rod for elevating a back portion of the seat pan.

Generally, the spring brake device for elevating the back portion of the seat cushion is installed, within a range of the seat occupant's reach with hand, on a front side of the seat cushion at a side portion of the seat cushion. The sector gear is also installed in the vicinity of the spring brake device. Therefore, in order to elevate the back portion of the seat cushion, it is necessary to interlock the sector gear of the spring brake device with the link lever of the back interlock rod via a linkage. In this condition, the sector gear is rotatably supported by the front interlock rod.

The spring brake device is provided with a shaft which has a knob axially outside. The shaft is rotatably supported by a drum which is shaped into a cup and has an internal wall. A substantially sector-shaped core is integrated with the shaft. The core has a cutout, and is received in the drum. A spring is received in the drum, and is slidably pressed against the internal wall of the drum. The spring is coaxial with the shaft, and each end of the spring can abut on an edge of the cutout. The spring expands resiliently to increase its diameter and thereby produces a braking force. When the knob is turned in forward or reverse direction, the spring shrinks in diameter and rotates to rotate a drive gear having an engaging portion extending in the cutout of the core.

Generally, a front passenger's seat does not have the seat lifter as is installed on the driver's seat. However, it is becoming necessary to share component parts so as to decrease cost. Therefore, in many cases the driver's seat has such a mechanism that the driver's seat can be used for the front passenger's seat as well with the seat lifter removed from the driver's seat. Such multipurpose seats are also available for vehicles having right steering wheels or left steering wheels.

However, providing the above conventional vehicular seat with the seat lifter requires an enlargement of component parts such as the base plates of the seat reclining device and the upper rails of a seat slide device. With this, the front passenger's seat adopting such multipurpose seat method also becomes large in size and heavy in weight although the front passenger's seat does not require the seat lifter. Recently, lightening component parts of the vehicle is required. Therefore, the vehicular seat as well must contribute to meet such requirement. However, whether to provide the vehicular seat with the seat lifter or not requires modifications (change in weight or redesigned configuration) of component parts such as the base plates. This causes the increased number of different component parts and higher cost.

Moreover, elevating the back portion of the seat cushion requires a large number of different component parts and causes high cost for the following reason: A first end of the link arm is pivotally supported by the sector gear engaging with the drive gear of the spring brake device which is disposed on the front side of the seat cushion, and a second end of the link arm is pivotally supported by the link lever of the back interlock rod. Also, such elevation of the back portion of the seat cushion causes frequent backlashes. Furthermore, vehicle safety has become a more concern recently. Therefore, the vehicular seat must be rigid enough to cause no deformation in a side vehicular collision so as to secure the seat occupant within a predetermined lateral range.

### SUMMARY OF THE INVENTION

It is, therefore, an object of the present invention to provide a vehicular seat having a seat lifter with simplified function of elevating a back portion of the seat lifter. It is the other object of the present invention to make the vehicular seat rigid enough in right and left directions as to cause no failures in a side vehicular collision.

There is provided a seat having a seat back and a seat cushion, according to the present invention. The seat comprises: a pair of first and second seat slide devices; a pair of first and second base plates; a pair of first and second arm plates adapted to be secured to the seat back of the seat; a pair of first and second lock devices for reclining the seat back of the seat; a drive device secured to one of the base plates, and comprising a drive gear; and an interlock rod having a first end portion and a second end portion. The interlock rod comprises: a pair of first and second stoppers fixedly disposed, respectively, in the vicinity of the first and second end portions of the interlock rod; a link lever for supporting a back portion of the seat cushion of the seat; and a sector gear fixedly disposed at one of the first and second end portions of the interlock rod.

Moreover, according to the present invention, an adjusting mechanism for a seat of a vehicle, comprises: first and second upright base plates for supporting a seat back of the seat; a lifter drive device fixed to the first base plate, for raising and lowering a seating surface of the seat; and an interlock rod which extends, in the right and left direction of the seat, between the first and second base plates, which is rotatably supported at a first end by the first base plate and at a second end by the second base plate, and which is connected with the lifter drive device, for raising and lowering the seating surface. The interlock rod comprises: first and second outward flanges for abutting, respectively, against the inside surfaces of the first and second base plates.

### BRIEF DESCRIPTION OF THE DRAWINGS

Fig. 1 is a perspective view of an essential part of a vehicular seat, according to a first preferred embodiment of the present invention.
Fig. 2 is a side view of the seat reclining device taken in a direction of an arrow "Y" in Fig. 1.
Fig. 3 is a side view of the seat reclining device taken in a direction of an arrow "Z" in Fig. 1.
Fig. 4 is a perspective view of an essential part of the vehicular seat, according to a second preferred embodiment of the present invention.
Fig. 5 is a front view of a lock device with a cap removed.
Fig. 6 is an exploded perspective view of the lock device.
Fig. 7 is an exploded perspective view of a spring brake device.
Fig. 8 is a longitudinal section of the spring brake device.

### DETAILED DESCRIPTION OF THE PREFERRED EMBODIMENT

A seat reclining mechanism 1 disclosed in the following first and second embodiments is basically applied to a driver's seat of a vehicle. In addition, some members of the seat reclining mechanism 1 disclosed in the following first and second embodiments have, if necessary, suffixes "F" denoting first or "S" denoting second. With this, each of those members of the seat reclining mechanism 1 is properly distinguished from its counterpart. Each of F and S is to be suffixed to a numeral following each member.

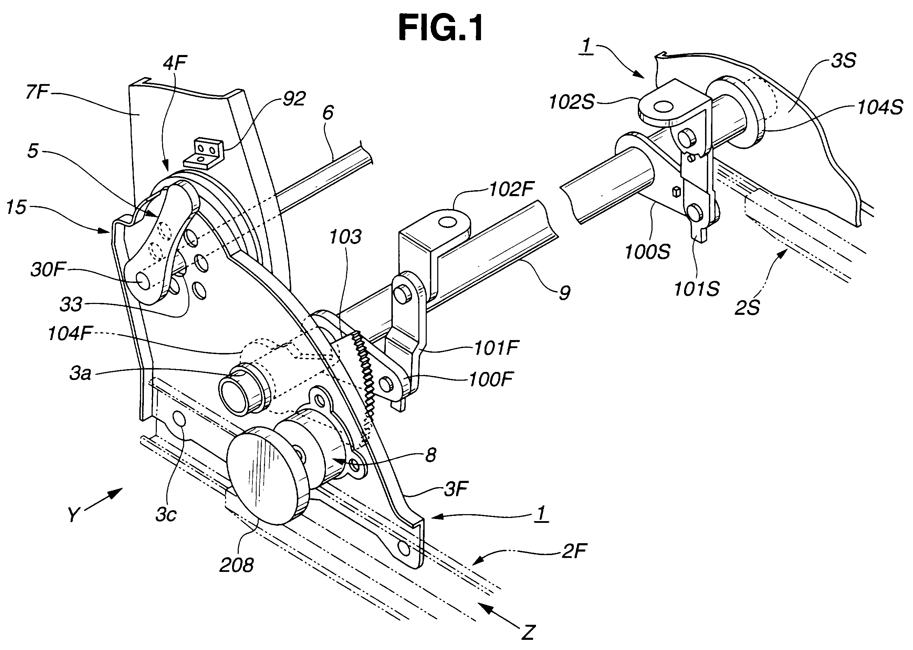

As is seen in Fig. 1, there is provided a vehicular seat, according to the first preferred embodiment of the present invention.

The seat reclining mechanism 1 has a pair of first and second seat slide devices 2F, 2S disposed on a floor of a vehicle, and a pair of first and second base plates 3F, 3S standing upright at the back of the seat reclining mechanism 1. The first and second base plates 3F, 3S, respectively, have first and second lock devices 4F, 4S for reclining the seat of the vehicle. Each of the lock devices 4F, 4S is round in shape, and has therein a unified mechanism that is to be mentioned in detail hereinafter. The first and second lock devices 4F, 4S further have, respectively, first and second operation shafts 30F, 30S. An interlock shaft 6 is disposed between the first and second lock devices 4F, 4S, and has a first and second ends. The first end of the interlock shaft 6 is interlocked with the first operation shaft 30F, while the second end of the interlock shaft 6 is interlocked with the second operation shaft 305. One of the first and second operation shafts 30F, 30S has an operation lever 5. Each of the lock devices 4F, 45 has a first side and a second side. The base plate 3 is fixed to one of the first and second sides of the lock device 4. In the first and second embodiments, the base plate 3 is fixed to the first side (outside) of the lock device 4. A pair of first and second arm plates 7F, 7S are fixed to a seat back (not shown) of the vehicular seat. The arm plate 7 is connected to the lock device 4 on an opposite side to the base plate 3. The arm plate 7 rotates around a center axis of the lock device 4. The seat back (not shown) is turned around the center axis of the lock device 4 in a manner to be inclined forward and backward.

There is provided a hole 3a on the base plate 3 in the vicinity of the lock device 4. The hole 3a has therearound a flange. There is provided an interlock rod 9 extending from the first base plate 3F to the second base plate 3S. The interlock rod 9 is inserted into the hole 3a from a first side of the hole 3a in such a manner that an end of the interlock rod 9 is rotatably supported by an internal wall of the hole 3a, and in such a manner as to project from a second side of the hole 3a. There are provided a pair of first and second link levers 100F, 1005, respectively, in the vicinity of the first and second ends of the interlock rod 9. Each of the first and second link levers 100F, 100S is fixed to the interlock rod 9 through a welding in such a manner as to form an intersecting angle of 90 degrees with the interlock rod 9. There are provided a pair of first and second link arms 101F, 101S fixed, respectively, to the first and second link levers 100F, 100S. The link arm 101 is pivotable around an end of the link lever 100. Moreover, there is provided a metal fitting 102 for fixing the seat cushion (not shown). The metal fitting 102 is pivotable around an end of the link arm 101. Furthermore, there is provided a sector gear 103 in the vicinity of the first end of the interlock rod 9 in such a manner as to form an intersecting angle of 90 degrees with the interlock rod 9. In Fig. 1, the sector gear 103 is outside the first link lever 100F on the interlock rod 9 .

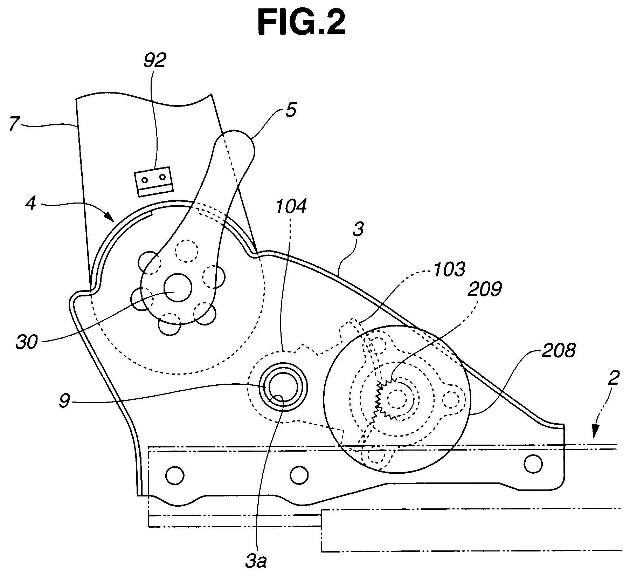

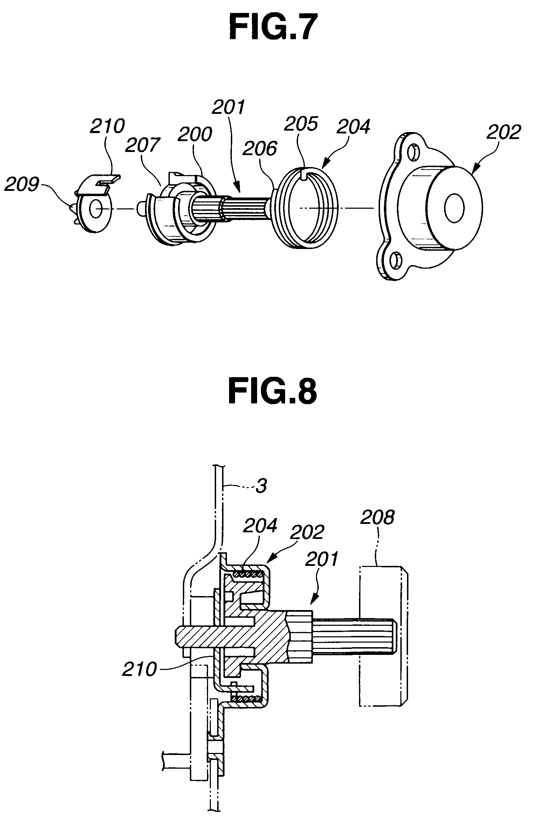

As is seen in Fig. 1, there is provided a spring brake device (drive device) 8 fixed to the first base plate 3F. The spring brake device 8 is equipped with a drive gear wheel 209 shown in Figs. 2, 7. Gear teeth of the drive gear wheel 209 mesh with those of the sector gear 103. There are provided first and second stoppers 104F, 104S fixed to the interlock rod 9 through welding or the like. The first and second stoppers 104F, 104S are disposed, respectively, in the vicinity of the first and second ends of the interlock rod 9 inside the base plates 3F, 3S. The first stopper 104F is integrated with the sector gear 103 in Fig. 1. The stopper 104 is so disposed as to abut on an inside surface of the base plate 3. The interlock rod 9 is straight, and is formed into a hollow pipe. Moreover, the interlock rod 9 has a large diameter or a thick wall for obtaining high section modulus. For preventing the interlock rod 9 from being removed from the hole 3a of the base plate 3, there is provided a push nut (not shown) or a snap ring (not shown) at the end of the interlock rod 9.

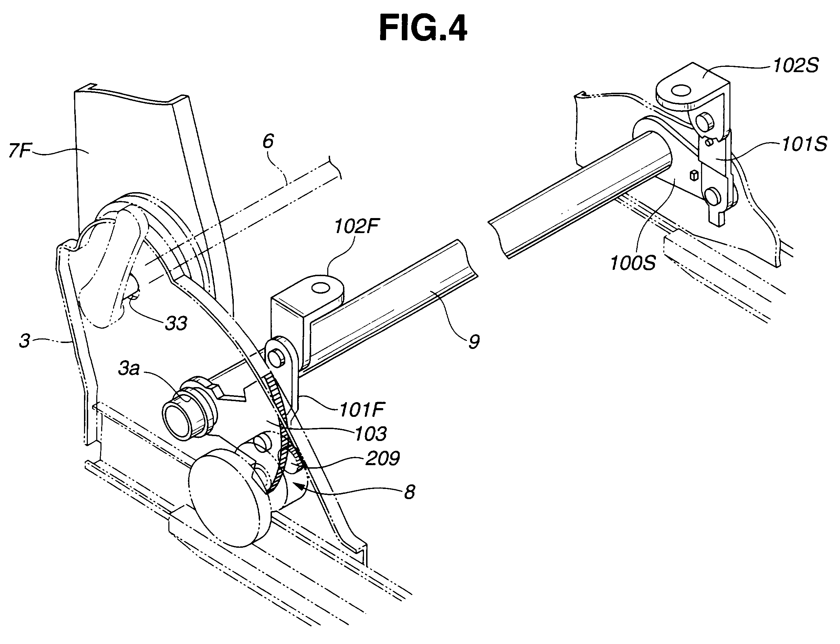

As is seen in Fig. 4, there is provided a vehicular seat, according to the second preferred embodiment of the present invention.

In the second embodiment, the sector gear 103 is integrated with the first link lever 100F, and the second link lever 100S is integrated with the second stopper 104S. Each of the sector gear 103 and the second link lever 100S has an outside surface for abutting on the inside surface of the adjacent base plate 3. The first link arm 101F is pivotally supported by the sector gear 103. With this, the sector gear 103 and the second link lever 100S have the same function as that of the stopper 104. The interlock rod 9 having the thus obtained sector gear 103 integrated with the first stopper 104F and the thus obtained second link lever 100S integrated with the second stopper 104S secures a predetermined distance between the first and second base plates 3F, 3S in a side vehicular collision, to thereby protect the seat occupant.

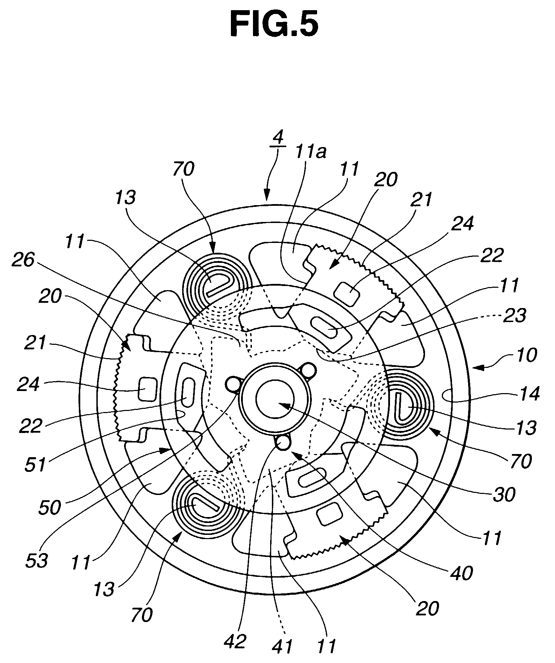

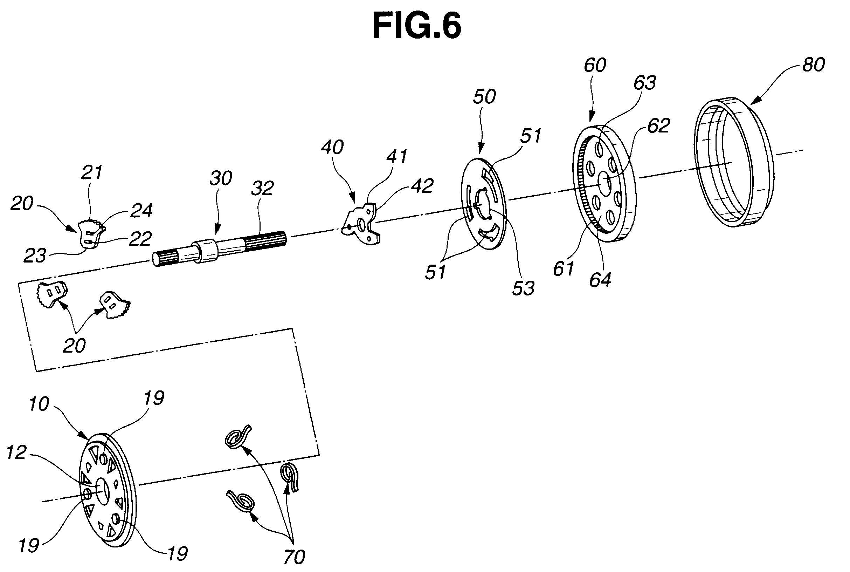

Disclosed below are details about a constitution of the lock device 4 having therein the unified mechanism. As is seen in Figs. 5 and 6, the lock device 4 has a circular case 10 shaped like a circular disc, a cap 60, a lock gear 20, the operation shaft 30, a cam plate 40, a synchronous plate 50 and a lock spring 70. The circular case 10 has a circular dent 14, an internal circumferential face, and a through hole 12 opened in the center of the circular case 10. The cap 60 is fit for the circular dent 14 of the circular case 10. The cap 60 has an external circumferential face rotatable along the internal circumferential face of the circular case 10, and a through hole 62 opened in the center of the cap 60. Moreover, the cap 60 has internal gear teeth 61 along the internal circumferential face of the circular dent 14. The lock gear 20 is disposed in the circular case 10, and is slidable in a radial direction in Fig. 5. Moreover, the lock gear 20 has external gear teeth 21 engaging with the internal gear teeth 61 of the cap 60. The operation shaft 30 penetrates into the through holes 12, 62, and is rotatable in the through holes 12, 62 in such a manner as to form a space therebetween. The cam plate 40 is integrated with the operation shaft 30, and has first and second sides. The cam plate 40 moves the lock gear 20 radially outwardly in Fig. 5 when the operation shaft 30 is rotated in the counter-clockwise direction in Fig. 5. The synchronous plate 50 is disposed on the first side (right side in Fig. 6) of the cam plate 40. The synchronous plate 50 moves the lock gear 20 radially inwardly, synchronously with a rotation of the cam plate 40, when the operation shaft 30 is rotated in the clockwise direction in Fig. 5. The lock spring 70 continuously biases the cam plate 40 in a locking direction, namely, in the counter-clockwise direction in Fig. 5. The biasing forces by the lock springs 70 applied to the cam plate 40 cause the external gear teeth 21 of the lock gear 20 to engage with the internal gear teeth 61 of the cap 60. In this (lock) state, the lock gear 20 prevents relative rotation between the circular case 10 and the cap 60. Contrary to this, rotating the operation shaft 30 in the clockwise direction in Fig. 5 allows the synchronous plate 50 to move the lock gear 20 radially inwardly, to thereby release such locked condition. With this, the circular case 10 is moved freely relative to the cap 60 (released condition).

In the example of Figs. 5, 6, there are provided three of the lock gears 20 arranged around the operation shaft 30 in the circular case 10, at regular angular intervals. The circular case 10 has three pairs of guides 11 for guiding the three lock gears 20 to move radially outwardly and inwardly. Each lock gear 20 is guided between two parallel confronting guide surfaces 11a of one of the three pairs of guides 11. The external gear teeth 21 of each lock gear 20 are arranged in the form of a circular arc whose radius is equal to that of the internal gear teeth 61 of the cap 60. There is provided an inside projection 22 on a first surface of each lock gear 20. The inside projection 22 of each lock gear 20 engages with one of cam grooves 51 of the synchronous plate 50. The operation shaft 30 penetrates into the through hole 12 of the circular case 10 and the through hole 62 of the cap 60 in such a manner as to form a space therebetween. The operation shaft 30 further penetrates into a through hole 33 (Fig. 4) formed on the base plate 3 and a through hole 34 (not shown) formed on the arm plate 7 in such a manner as to form a space therebetween. The operation shaft 30 projects outwardly from the through hole 33 of the base plate 3, where the operation lever 5 is mounted. The operation shaft 30 projects outwardly from the through hole 34 (not shown) of the arm plate 7, where splines 32 are formed for connecting the operation shaft 30 with the interlock shaft 6.

As is seen in Fig. 6, the cam plate 40 is fixedly press fitted to a substantially middle of the operation shaft 30. As is seen in Fig. 5, the cam plate 40 has therearound three cam faces 41. Each of the cam faces 41 engages with an engaging portion 23 of one lock gear 20. The engaging portion 23 is formed inside the lock gear 20 in such a manner as to be positioned radially opposite to the external gear teeth 21 of the lock gear 20. Thus, the cam plate 40 can force the lock gears 20 radially outwardly by pushing the engaging portions 23 with the cam faces 41. The lock springs 70 three in number are mounted in the circular case 10, each having a projection 13. Each of the lock springs 70 has an inner end engaged with one of the projections 13, and an outer end engaged with one of engaging portions 26 of the cam plate 40. With this, the lock springs 70 continuously bias the lock gears 20 radially outwardly by way of the engaging portions 26 of the cam plate 40, and the engaging portions 23 of the lock gears 20.

As is seen in Figs. 5, 6, the synchronous plate 50 has three mounting holes 53, each engaging with one of three projections 42 formed on the first side of the cam plate 40. The three mounting holes 53 and the three projections 42 are arranged regularly around the operation shaft 30 at angular intervals of 120 degrees. The synchronous plate 50 is rotatable as a unit with the operation shaft 30. The synchronous plate 50 has three cam grooves 51, each engaging with the inside projection 22 of the lock gear 20. The cap 60 is fit in the circular dent 14 formed inside the circular case 10. The cap 60 has the external circumferential face rotatable relative to the internal circumferential face of the circular dent 14. Moreover, the cap 60 has the internal gear teeth 61 in an internal circumferential face of a circular dent 64. The internal gear teeth 61 are capable of engaging with the external gear teeth 21 of the lock gears 20.

Moreover, each of the three lock gears 20 has an outside projection 24 that is disposed radially outwardly in the vicinity of one of the three inside projections 22. The outside projections 24 abut on an inside surface of the cap 60, to thereby prevent the lock gear 20 from causing any backlash between the cap 60 and the circular case 10. A cover 80 in Fig. 6 covers external circumferences of the circular case 10 and the cap 60 in such a manner as to support the two members 10, 60, to thereby allow the two members 10, 60 to rotate relative to each other.

The cap 60 is fixed to the adjacent arm plate 7 through a plurality of projections 63, for example six in number in Fig. 6, formed on a second side of the cap 60. The projections 63 of the cap 60 are, respectively, fit in mounting holes 7e (not shown) formed in the arm plate 7, and joined by welding. The circular case 10, on the other hand, is fixed to the adjacent base plate 3 in the same manner through a plurality of projections 19 of the case 10 and a plurality of mounting holes 3e (not shown) formed in the base plate 3.

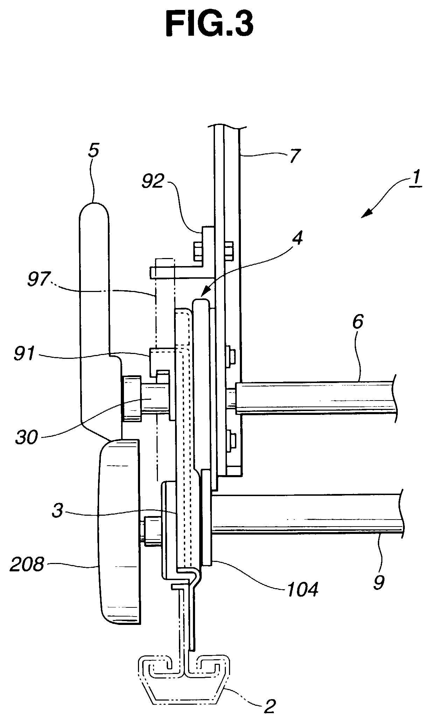

Disclosed below are operations of the lock device 4. The cam plate 40 in cooperation with the lock springs 70 normally pushes the lock gears 20 radially outwardly. The external gear teeth 21 of the lock gears 20 engage with the internal gear teeth 61 of the cap 60, to thereby lock the cap 60 unrotatable. The cap 60 is released when the operation shaft 30 is rotated in the clockwise direction in Fig. 5 with the operation lever 5. With this, the cam plate 40 is disengaged from the engaging portion 23 of the lock gear 20. Then, the cam groove 51 of the synchronous plate 50 in cooperation with the inside projection 22 of the lock gear 20 moves the lock gear 20 radially inwardly in Fig. 5. With this, the external gear teeth 21 of the lock gear 20 are disengaged from the internal gear teeth 61 of the cap 60, to thereby release the locked condition between the lock gear 20 and the cap 60. Thereby, a return spring 97 shown in Fig. 3 biases the arm plate 7 mounted on the cap 60 so that the arm plate 7 can be rotated in a front direction of the vehicle. The return spring 97 is spirally wound, and has an internal end and an external end. As is seen in Fig. 3, the internal end of the return spring 97 engages with the engaging portion 91 of the base plate 3 while the external end of the return spring 97 engages with the engaging portion 92 of the arm plate 7.

Disclosed below is the spring brake device 8 acting as a drive gear. Such spring brake device 8 is known per se. As is seen in Figs. 7, 8, there is provided a handle shaft 201 having a core 200. The core 200 has a cutout 207 around a part of its circumference. The handle shaft 201 is fitted to a brake drum 202 such that the core 200 is positioned in the brake drum 202. Moreover, there is provided a torsion spring 204 between the brake drum 202 and the core 200. The torsion spring 204 is so disposed that its external circumference is pressed on an internal wall of the brake drum 202. The torsion spring 204 has a first hook 205 at one end and a second hook 206 at the other end. Both of the first and second hooks 205 and 206 are placed in the cutout 207 of the core 200.

Moreover, as is seen in Fig. 8, there is provided a knob 208 fixed at a first end of the handle shaft 201. At a second end of the handle shaft 201, as is seen in Fig. 7, there is provided the drive gear wheel 209 rotatably supported by the handle shaft 201. A nail 210 is integrated with the drive gear wheel 209. The nail 210 is inserted in an area between the first and second hooks 205, 206 of the torsion spring 204. Rotating the knob 208 reduces the torsion spring 204 in diameter, to thereby rotate the drive gear 209.

Therefore, rotation of the knob 208 in forward and reverse directions causes the sector gear 103 to swing up and down via the drive gear 209. The interlock rod 9 is rotated in its forward and reverse directions, to thereby allow the first and second link levers 100F, 100S to move up and down. With this, the first and second metal fittings 102F, 102S are moved up and down via, respectively, the first and second link arms 101F, 101S, to thereby move up and down the seat cushion of the seat of the vehicle. The thus achieved seat cushion adjustment helps the seat occupant to come up with his or her best vertical eye point.

With a load applied to the first base plate 3F in the side vehicular collision, the first base plate 3F abuts against the first stopper 104F, to thereby transmit the load to the interlock rod 9. Then, the interlock rod 9 allows the second stopper 104S to convey the thus applied load to the second base plate 3S. With this, the first and second base plates 3F, 3S can be secured at a predetermined distance from each other, to thereby protect the seat occupant from injuring his or her lumbar part.

In the above disclosed first and second embodiments of the present invention, there has been disclosed the lock device 4 formed into a round recliner and comprising the unified mechanism. The lock device 4 has stages. Instead of the stages, the lock device 4 can be the one having a planetary gear with no stages. Moreover, in the first and second embodiments, the lock device 4 has the first and second sides, each of which fixed to one of the base plate 3 and the arm plate 7. Contrary to this, each of the circular case 10 and the cap 60 is allowed to have an extended external circumference to be fixed, respectively, to the base plate 3 and the arm plate 7. The lock device 4 with the thus prepared extended external circumference, likewise, can be the one having the planetary gear with no stages. Moreover, in the above first and second embodiments, the welding is used for fixing the base plate 3 and the arm plate 7 to the lock device 4. However, caulking pins and the like can replace the welding. Furthermore, in the first and second embodiments, the spring brake device 8 is used for the drive gear. However, a clutch brake device can replace the spring brake device 8.

In the above first and second embodiments, it is the driver's seat that is equipped with the seat lifter 16 in which the metal fitting 102 is mounted on the link lever 100 of the interlock rod 9 via the link arm 101. Contrary to this, in the case of a front passenger's seat, the metal fitting 102 can be directly mounted on the link lever 100. Moreover, it is only necessary that the stopper 104 is rotatably mounted on the base plate 3 with bolts and the like (no need of welding). With this, a more effective arrangement is achieved between the seat reclining mechanism 1, the seat lifter 16 and seat slide device 2. Furthermore, the driver's seat and the front passenger's seat can share component parts.

This summarizes that all component parts of the seat reclining mechanism 1 of the vehicular seat, excluding the interlock rod 9 and members mounted on the interlock rod 9, can be shared among the seat reclining mechanisms 1 of the driver's seat and the front passenger's seat. The same is true of the seats of a vehicle having a right steering wheel or a left steering wheel. With this, reduction in the number of different component parts is achieved, thus reducing cost.

Furthermore, since the base plate 3 has the spring brake device 8 in the vicinity of the lock device 4, the base plate 3 can be substantially triangular in shape for adjustably supporting the seat back (not shown) in the forward and backward directions of the vehicle. With this, the base plate 3 can be made small in size and light in weight.

## Claims

1. A seat having a seat back and a seat cushion, the seat comprising:
a pair of first and second seat slide devices;
a pair of first and second base plates, each of the base plates being disposed at a back end portion of one of the seat slide devices, each of the base plates having an inside surface and an outside surface opposed to the inside surface, each of the base plates further having a hole;
a pair of first and second arm plates adapted to be secured to the seat back of the seat, each of the arm plates being pivotally supported at an upper portion of one of the base plates;
a pair of first and second lock devices for reclining the seat back of the seat, each of the lock devices being put between one of the base plates and one of the arm plates;
a drive device secured to one of the base plates, and comprising a drive gear; and
an interlock rod having a first end portion and a second end portion, each of the first and second end portions of the interlock rod being rotatably supported in the hole of one of the base plates, the hole being disposed in a vicinity of one of the lock devices, the interlock rod comprising:
a pair of first and second stoppers fixedly disposed,
respectively, in a vicinity of the first and second end portions of the interlock rod, each of the stoppers being provided for abutting on the inside surface of one of the base plates;
a link lever for supporting a back portion of the seat cushion of the seat, the link lever being fixed to the interlock rod; and
a sector gear fixedly disposed at one of the first and second end portions of the interlock rod, the sector gear meshing with the drive gear of the drive device.

2. The seat as claimed in Claim 1, wherein the sector gear and one of the first and second stoppers are integrated.

3. The seat as claimed in Claim 1, wherein the link lever of the interlock rod is a one that is pairwise consisting of first and second link levers, and wherein the sector gear, the first link lever and the first stopper are integrated while the second link lever and the second stopper are integrated.

4. The seat as claimed in Claim 1, wherein the link lever of the interlock rod connects with a link arm which is put between the link lever and the back portion of the seat cushion for connecting the link lever and the back portion of the seat cushion.

5. The seat as claimed in Claim 4, wherein the interlock rod is straight.

6. The seat as claimed in Claim 5, wherein each of the stoppers is positioned outside the link lever on the interlock rod, and wherein the pair of the stoppers secure a predetermined distance between the inside surfaces of the pair of the base plates.

7. The seat as claimed in Claim 1, wherein the seat is a vehicular seat, and wherein the interlock rod is in a form of a hollow pipe.

8. The seat as claimed in Claim 1, wherein each of the lock devices is substantially circular in shape and comprises:
an operation shaft rotatably disposed on and along a center axis of the lock device;
a first member fixed to one of the base plates and formed with a through hole receiving the operation shaft rotatably;
a second member rotatable relative to the first member and fixed to one of the arm plates; and
a lock gear disposed between the first member and the second member, for locking and unlocking the second member relative to the first member in response to rotation of the operation shaft.

9. The seat as claimed in Claim 1, wherein the drive device having the drive gear which meshes with the sector gear for driving the sector gear further comprises:
a drum secured to one of the base plates;
a shaft on which the drive gear is rotatably mounted;
a spring received in the drum, for normally expanding to press against an inside surface of the drum, and for shrinking to rotate the drive gear when the shaft is rotated.

10. An adjusting mechanism for a seat of a vehicle, comprising:
first and second upright base plates for supporting a seat back of the seat, the first and second base plates being spaced apart from each other in a right and left direction of the seat, each of the first and second base plates comprising an inside surface facing toward the other;
a lifter drive device fixed to the first base plate, for raising and lowering a seating surface of the seat; and
an interlock rod which extends, in the right and left direction of the seat, between the first base plate and the second base plate, which is rotatably supported at a first end by the first base plate and at a second end by the second base plate, and which is connected with the lifter drive device, for raising and lowering the seating surface, the interlock rod comprising:
first and second outward flanges for abutting, respectively, against the inside surfaces of the first and second base plates.

11. The adjusting mechanism as claimed in Claim 10, wherein the first base plate extends from a rear end to a front end toward a front end of the seat, and comprises a first portion for supporting a reclining lock device for reclining the seat back, a second portion for supporting the lifter drive device, and an intermediate portion for supporting the first end of the interlock rod, the second portion being located between the first portion and the front end of the first base plate, the intermediate portion being located between the first portion and the second portion, the first portion being located above the intermediate portion.

12. The adjusting mechanism as claimed in Claim 10, wherein the interlock rod further comprises first and second link levers for raising and lowering the seating surface, and the first and second link levers are located between the first and second outward flanges.

13. The adjusting mechanism as claimed in Claim 12, wherein the interlock rod further comprises a sector gear for engaging with a drive gear of the lifter drive device, the sector gear projecting integrally from the first outward flange .

14. The adjusting mechanism as claimed in Claim 10, wherein the interlock rod further comprises first and second link levers for raising and lowering the seating surface, the first link lever projecting integrally from the first outward flange, the second link lever projecting integrally from the second outward flange, and the first link lever having teeth for engaging with a drive gear of the lifter drive device.
